# EUROPEAN PATENT APPLICATION

(11) **EP 4 760 193 A1**
(43) Date of publication of application: **17.06.2026**
(21) Application number: 24383355.5
(22) Date of filing: 11.12.2024
(51) Int. Cl.: F28F 3/14

(54) **HEAT EXCHANGER PILLOW PLATE**

(71) Applicant: AIRBUS OPERATIONS, S.L.U., 28906 Getafe, Madrid (ES)
(72) Inventor: BERROCOSO REDONDO, Jorge, 28906 Getafe, Madrid (ES); CALDERON GOMEZ, Pablo Manuel, 28906 Getafe, Madrid (ES); GOMEZ FERNANDEZ, Agustin, 28906 Getafe, Madrid (ES); LASA ARMENTIA, Aratz, 28906 Getafe, Madrid (ES); SANTANA SANTANA, Domingo Jose, 28906 Getafe, Madrid (ES); GONZALEZ GOMEZ, Pedro Ángel, 28906 Getafe, Madrid (ES); ACOSTA IBORRA, Antonio, 28906 Getafe, Madrid (ES); LAPORTE AZCUE, Marta, 28906 Getafe, Madrid (ES)
(74) Representative: ABG Intellectual Property Law, S.L.

(57) **Abstract**

The present invention relates to a heat exchanger for an aircraft. In particular, the present invention belongs to the field of heat exchangers pillow plates configured for being mounted in an aircraft acoustic muffler.

## Description

### TECHNICAL FIELD OF THE INVENTION

The present invention relates to a heat exchanger for an aircraft. In particular, the present invention belongs to the field of heat exchangers pillow plates configured for being mounted in an aircraft acoustic muffler.

### BACKGROUND OF THE INVENTION

Heat exchangers are devices used for forcing the exchange of energy, mostly based on heat, between two sources which may be liquid sources, gas sources or liquid and gas sources. Common heat exchangers present designs made for establishing a thermodynamic communication between these two sources, normally flowing in countercurrent or crosswise, and generally separated in order to prevent mixing between the two sources.

The Heat Exchanger technology of Pillow Plates consists of one or more plates with two metal sheets, for example stainless-steel or Inconel sheets, which are laser welded through a series of spots and lines. The welding pattern generates a flow path in the inner side of the sheets.

Conversely, the edges of the metal sheets are fully welded, other than the connecting ports, ensuring a fully sealed part. Upon welding, the pillow plates are inflated by hydroforming, resulting in a series of wavy channels thanks to the positioning of the spot and line welds.

In the Pillow plate heat exchangers (PPHE), the heat is transferred between two unmixed fluids. A primary fluid circulates inside the plate or plates whilst a secondary fluid circulates surrounding the external side of the plate or plates.

Typical applications of PPHE up to date can be found mainly in food industry (dairy industry, wine...), pulp and paper industry, and HVAC (heating, ventilation and air conditioning). These applications are low demanding in terms of temperature, where the structural integrity of the pillow plate is not compromised by thermal conditions.

On the contrary, PPHE has never been explored in aircraft-related applications, wherein the thermal conditions could affect such structural integrity of the pillow plate.

For example, in order to use a PPHE as a recuperator in an auxiliary power unit (APU) of an aircraft muffler, the pillow plate must endure the stresses resulting from large temperature gradients, around 150°C, in a medium/high temperature application.

One of the most critical locations subjected to temperature gradients are the spot welds, since these regions are not refrigerated by the cold fluid that circulates inside the plates and recovers the heat energy from the exhaust gasses.

In this way, there is a need in the art for a PPHE able to withstand typical large temperature gradients inside an aircraft, and more particularly, for a PPHE that can be placed in the acoustic muffler of an aircraft.

### SUMMARY OF THE INVENTION

The present invention provides a solution for the aforementioned problems, by a Pillow Plates Heat Exchanger, PPHE, assembly for an aircraft acoustic muffler according to claim 1, an acoustic muffler for an aircraft comprising a PPHE assembly according to claim 11, an aircraft comprising an acoustic muffler according to claim 12 and a method for manufacturing a Pillow Plates Heat Exchanger assembly according to claim 13. In dependent claims, preferred embodiments of the invention are defined.

In a first inventive aspect, the invention provides a Pillow Plates Heat Exchanger, PPHE, assembly for an aircraft acoustic muffler that comprises at least one plate, wherein the at least one plate comprises:
- at least two sheets being coupled to each other by means of
   - a plurality of welding spots that join respective portions of each sheet, defining a plurality of welded areas, and
   - a plurality of continuous welds that join, at least partially, respective external edges of each sheet, and
- an inner hollow volume defined between the at least two sheets, the inner hollow volume comprising a first fluid and being configured for transferring heat from a second fluid located outside the at least one plate to the first fluid, in an operative mode, and
wherein at least one of the plurality of welding spots comprises a perforated hole.

In this first inventive aspect, it is described a PPHE assembly comprising one or more plates, each plate in turn comprising at least two sheets and an inner hollow volume. Throughout this document, the terms "plate" and "pillow plate" are used indistinctly.

The sheets are coupled to each other by means of a plurality of welding spots that join a plurality of portions of one sheet with a corresponding plurality of portions of the other sheet. Throughout this document, "welding spots" will be understood as the points or small areas where the sheets of a plate are welded to each other defining "welded areas".

The sheets are further coupled to each other by means of continuous welds that join, at least partially, the external edges of each sheet. The expression "at least partially" indicates that there is no total welding in the external edges of the sheets, because in at least one part of such edges one or more connecting ports must be coupled to the sheets. Nevertheless, these continuous welds ensure that the plate is fully sealed.

In an embodiment, the sheets are made of a metal. In a more particular embodiment, the sheets are stainless-steel or Inconel sheets for very high temperatures.

In an embodiment, the welding spots and the continuous welds are performed by means of laser.

Upon welding, the plate is inflated by hydroforming with a first fluid, resulting in a series of wavy channels thanks to the positioning of the welding spots and the continuous welds. In this way, an inner hollow volume is defined between the at least two sheets that comprises the first fluid. The aim of such inner hollow volume is to transfer heat from a second fluid located outside the plate to its first fluid, when the PPHE is in an operative mode.

In an embodiment, the first fluid is water, steam, a refrigerant, or an oil. In an embodiment, the first fluid is in a gas state or a liquid state. Examples of the first fluid are Nitrogen, Helium, etc.

Besides, at least one of the plurality of the welding spots comprises a perforated hole. Such perforated hole/s contribute to stress relief in the PPHE assembly and, in addition, achieve thermal stress relief, particularly in the welded areas, for the PPHE assembly. The perforated holes produce a better uniform thermal field thus having less thermal stress and increasing the life of the device.

In a preferred embodiment, the perforated holes are performed in the welding spots after the hydroforming process of the pillow plate. In an alternative embodiment, the perforated holes are performed before the hydroforming process.

As mentioned before, one of the most critical locations subjected to temperature gradients are the welding spots, since these regions are not refrigerated by the cold fluid that circulates inside the plates and recovers the heat energy from the exhaust gasses. This inconvenience is solved thanks to the presence of the perforated holes, what leads to the fact that the PPHE assembly can be used as a recuperator in the auxiliary power unit (APU), as the pillow plate can endure the stresses resulting from the large temperature gradients, around 400°C, that takes place in this aircraft element.

Hence, this invention proposes including perforated holes in the welding spots, thus removing the critical portion of the welded area which does not have influence in the thermohydraulic performance of the PPHE assembly. Besides, since the center of the welding spot does not work to support the internal pressure thereof, its presence is unnecessary.

More advantageously, these perforated holes achieve structural advantages in the PPHE assembly, such as:
- the temperature distribution is more uniform on the pillow-plate surfaces since the welding spots tend to overheat due to lack of cooling;
- a relief of thermal stresses is achieved on the pillow plates as a result of improved uniformity of temperature distribution; and
- a weight reduction takes place due to the elimination of the core material in the welding spots.

Further advantages of the PPHE assembly in comparison to known heat exchangers traditionally used in aircrafts, such as those based on shell tube technology, are:
- Cost-effectiveness, due to low welding costs.
- Saving material costs, as thinner materials can be used.
- The Pillow Plate welding pattern guarantees high turbulence and therefore creates high overall heat transfer coefficients.
- Reduced deposition (algae, lime, etc.) due to this higher turbulence (less fouling).
- Less pump capacity is required because, due to the low volume in the plate, little cooling / heating fluid needs to be circulated.
- By working with laser welding machines that are CNC-programmed, all desired shapes, recesses, fastening points and connections are possible

In a particular embodiment, the PPHE assembly further comprises a duct, wherein the at least one plate is arranged inside the duct and wherein the second fluid circulates through the volume existing between the at least one plate and the inner walls of the duct.

In this embodiment, the plate or plates of the PPHE assembly are confined inside a duct. Throughout this document, a "duct" will be understood as a pipe, tube, or channel that conveys a second fluid, such duct comprising an outer wall and an inner wall.

Aerospace applications typically require exchange of heat energy among fluids to operate properly. In this specific application, the heat exchange is produced from the second fluid of the duct to the first fluid of the plate, when the PPHE is in operative mode. In particular, the second fluid circulates through the remaining volume between the pillow plates and the inner wall of the duct, and the first fluid circulates inside the inner hollow volume of the pillow plates.

In a preferred embodiment, the cross-section shape of the duct is circular. Other shapes like rectangular and square are applicable to other embodiments.

In an embodiment, the second fluid is water, steam, a refrigerant, or an oil. In an embodiment, the second fluid is in a gas state or a liquid state. Examples of the second fluid are Helium, Nitrogen, etc.

In a particular embodiment, the contours of the perforated hole that delimit said perforated hole in each sheet are welded.

In other words, the perforated holes of the welding spots are reinforced by welding the accessible edges of the perforated holes, in addition to the existing remaining welded areas of the welding spot. This reinforcement ensures that the inner hollow volume between the sheets remains watertight.

In an embodiment, the edges of the perforated holes are reinforced by welding the edge contour after the hydroforming of the pillow plate to further enhance the junction of the plates.

In a particular embodiment, the perforated hole of the welding spot is concentric to the welded area of the welding spot.

Advantageously, the thermal distribution is more homogeneous in the overall plate by removing the welding spot area, since this area cannot be refrigerated. Therefore the perforated hole helps to avoid overheating in these welded areas, because the temperature around welded area is lower in the case of perforated plate.

In a particular embodiment, the pattern of the perforated holes depends on the temperature distribution expected in the plate in an operative mode, wherein
- the number of perforated holes is greater in the parts of the plate wherein it is expected to reach greater temperatures than in the parts of the plate wherein it is expected to reach lower temperatures, and/or
- the diameter of the perforated holes is greater in the parts of the plate wherein it is expected to reach greater temperatures than in the parts of the plate wherein it is expected to reach lower temperatures, and/or
- the pitch among perforated holes is lower in the parts of the plate wherein it is expected to reach greater temperatures than in the parts of the plate wherein it is expected to reach lower temperatures.

According to this embodiment, the pillow plate presents a pattern of perforated holes in the welding spots that depends on the expected temperature gradient distribution in the plate. This pattern allows to selectively relieve thermal stress in certain areas of the pillow plate according to a thermal gradient field, and hence achieve a balanced stress distribution.

Throughout the whole document, the "expected temperature gradient distribution" will be understood as the gradient of temperature that is expected to take place in the pillow plate when the PPHE assembly is in operative mode. The expected temperature gradient distribution can be calculated using finite element simulations or computational fluid dynamics models (CFD).

The possibility of selecting the number of perforated holes, the diameter of the perforated holes and/or the spacing between them (transverse welding pitch and longitudinal welding pitch) in different parts of the pillow plate, allows to control the structural design to form a pillow plate with benefits from a structural standpoint for pillow plates working at high temperatures, for example temperatures around 300°C.

Advantageously, such pillow plate welding pattern guarantees high turbulence and therefore creates high overall heat transfer coefficients; in addition, it reduces deposition due to this higher turbulence.

In a particular embodiment, all the welding spots comprise a perforated hole.

The number of perforated holes present in the pillow plate may vary from a single perforated hole to all the welding spots presenting a perforated hole in the pillow plate, depending on the temperature gradient distribution required in the plate.

In a particular embodiment, the at least one plate comprises at least one additional inner hollow volume defined between the at least two sheets, wherein
- the inner hollow volume and each additional inner hollow volume are separated by a continuous welding to avoid fluidic communication among them; and
- each additional inner hollow volume comprises an additional fluid that is equal to or that is different from the first fluid.

As mentioned before, the PPHE assembly comprises at least one pillow plate with an inner hollow volume within which a first fluid circulates. In case the assembly comprises also a duct within which the pillow plate is positioned, the PPHE assembly comprises a second fluid that circulates through the remaining volume between the pillow plate and the duct.

In this particular embodiment, there are more than these two fluids as, apart from the inner hollow volume of the plate, there are also one or more additional inner hollow volumes that are fluidically independent. Each additional inner hollow volume comprises an additional fluid, which can be equal to or different from the first fluid of the inner hollow volume.

In order to achieve fluidic independence, the inner hollow volume and each additional inner hollow volume are separated by a continuous welding to avoid the fluidic communication among them. In this way, each of such volumes comprises separate fluid paths in the pillow plate. The first fluid and the additional fluids subjected to heat transfer are thus not mixed in the circulation across the PPHE assembly.

The PPHE assembly allows the use of different fluids inside each additional inner hollow volume, which depends on the thermal characteristics to be achieved, as each fluid has different thermal and heat transfer characteristics.

In a particular embodiment, the pillow plate heat exchanger assembly comprises a plurality of plates assembled as a stack with an even or an uneven separation.

The PPHE assembly of this embodiment comprises a plurality of pillow plates assembled as a stack with separation among plates, such separation being even or uneven. In an embodiment, this separation of pillow plates depends on the geometry of the volume available to install the plates. A trade off analysis can be performed to optimise said separation, in particular, to meet the thermal transfer needs between the first and second fluids while minimising the pressure drop of the first and second fluids and the weight of the system.

Advantageously, an even spacing between the pillow plates allows to simplify the manufacturing process.

Advantageously, an uneven spacing between the pillow plates involves a higher thermal efficiency of the heat exchanger because, at the core, the temperature of the exhaust gases is higher. Additionally, the uneven spacing involves uniform hydraulic diameters, what leads to unify the mass flow of exhaust gases between the pillow plates.

In a particular embodiment, the plurality of plates of the stack are joined by means of at least one inlet collector and at least one outlet collector, the at least one inlet collector and the at least one outlet collector being configured to be in fluidic communication with the inner hollow volume of each plate and/or with the at least one additional inner hollow volume of each plate, if any.

The outlet and inlet collectors are conducts that, respectively, outputs the first fluid or the additional fluids off the plates and inputs the first fluid or the additional fluids in the plates.

In case there are not additional inner hollow volumes in the plates, the PPHE assembly comprises at least one outlet collector and at least one inlet collector, which are in fluid communication with the inner hollow volume of each plate of the stack to achieve the circulation of the first fluids.

In case there are additional inner hollow volumes in the plates, the PPHE assembly comprises a plurality of outlet collectors and a plurality of inlet collectors. One of the outlet collectors and one of the inner collectors are in fluidic communication with the inner hollow volume of the plates and the rest of the outlet collectors and inlet collectors are in fluidic communication with the additional inner hollow volumes of the plates (one pair of collectors for each additional inner hollow volume of the plates).

In an embodiment, the pillow plate stack is joined rigidly by means of the inlet collector/s and the outlet collector/s.

In other embodiment, when the connection between collectors and the pillow plates is a flexible connection, the PPHE assembly comprises rigid spacers to keep the geometry of the stack.

In a particular embodiment, the first fluid of one or more of the plates of the stack is different from the first fluid of the rest of the plates of the stack.

In this embodiment, inside each plate of the stack circulates a first fluid equal to or different from the other/s first fluid/s of the rest of the pillow plates of the same stack. The selection of the fluids inside each pillow plate of the stack depends on the thermal characteristics to be achieved, as each fluid has different thermal and heat transfer characteristics.

In a second inventive aspect, the invention provides an acoustic muffler for an aircraft comprising a pillow plate heat exchanger assembly according to the first inventive aspect.

The acoustic muffler absorbs acoustic energy through their walls covered with materials with a high absorption coefficient, transforming sound into heat. In this way, an acoustic muffler comprising a pillow plate heat exchanger takes advantage of this heat to transfer it to another fluid.

In a third inventive aspect, the invention provides an aircraft comprising an acoustic muffler according to the second inventive aspect.

An aircraft that comprises an acoustic muffler with a pillow plate heat exchanger assembly also includes all the advantages associated with such assembly.

In a fourth inventive aspect, the invention provides a method for manufacturing a Pillow Plates Heat Exchanger assembly according to the first inventive aspect, wherein the method comprises the steps of:
i) providing at least two sheets;
ii) welding, at least partially, the external edges of the at least two sheets forming a plate;
iii) performing a plurality of welding spots to join respective portions of each sheet, defining a plurality of welded areas in the plate;
iv) inflating the space between the at least two sheets by hydroforming with a first fluid, defining an inner hollow volume inside the plate; and
v) perforating the welded area of at least one of the plurality of welding spots to form a perforated hole.

The fourth inventive aspect describes a method for manufacturing the PPHE assembly described before, being a process simple and cost-effective.

In step i), a provision of at least two sheets takes place. In an embodiment, the sheets are metallic. In a more particular embodiment, the sheets are made of stainless- steel or Inconel.

In step ii), the external edges of the sheets are welded defining a plate. The at least partial welding refers to the fact that the entire external edges of the at least two sheets are not welded because the connecting ports must be connected in some part of such edges. In an embodiment, an inlet and/or an outlet collector are fixed to the connecting ports to input the first fluid or the additional fluids in the plates and outputs the first fluid or the additional fluids off the plates.

In step iii), the sheets are joined at respective portions performing a plurality of welding spots, each one defining a welded areas in the plate.

Next, the method continues in step iv) inflating the space between the at least two sheets by hydroforming with a first fluid, defining an inner hollow volume inside the plate.

Finally, to improve the thermal characteristics of the plate, the method comprises a step of perforating the welded area of at least one of the plurality of welding spots to form a perforated hole. Preferably, the perforation of the holes is performed after the hydroforming process (step iv); however, in other embodiments, the perforation of the holes is performed before the hydroforming process.

The perforations can be made in all the welding spots or only in some welding spots.

In an embodiment, the perforated holes are performed concentrically to the welded areas of the welding spots.

In an embodiment, the perforated holes are performed forming a specific pattern in the plate.

In a more particular embodiment, the pattern of the perforated holes performed in the plate depends on the temperature distribution expected in the plate in an operative mode, wherein
- the number of perforated holes is greater in the parts of the plate wherein it is expected to reach greater temperatures than in the parts of the plate wherein it is expected to reach lower temperatures, and/or
- the diameter of the perforated holes is greater in the parts of the plate wherein it is expected to reach greater temperatures than in the parts of the plate wherein it is expected to reach lower temperatures, and/or
- the pitch among perforated holes is lower in the parts of the plate wherein it is expected to reach greater temperatures than in the parts of the plate wherein it is expected to reach lower temperatures.

These all combinations allow to control the stress relief and temperature gradients in the different areas of the pillow plates more efficiently.

In an embodiment, the method further comprises a step of welding the contours of the perforated hole/s that delimit said perforated hole/s in each sheet.

In an embodiment, the method further comprises a step of performing one or more continuous welding to further join the sheets, and a step of inflating the space between the sheets by hydroforming with one or more additional fluids so that one or more additional inner hollow volumes are created inside the plate, each one comprising an additional fluid. The additional fluid/s can be equal to or different from the first fluid. Additionally, the continuous welding has to be performed in such a way that the inner hollow volume of the plate and each of the additional inner hollow volumes of the plates are not in fluid communication among them.

In an embodiment, the method is repeated to generate a plurality of plates. In a more particular embodiment, the method further comprises a step of stacking the plurality of plates with an even or an uneven separation.

In an embodiment, the first fluid and the additional fluids (if any) are inputted in and outputted from the inner hollow volume and the additional inner hollow volumes (if any) by means of inlet collectors and outlet collectors.

In a particular embodiment, the steps ii) and iii) are performed with a laser welding machine.

By working with laser welding machines that are CNC-programmed, all desired shapes, recesses, fastening points and connections are possible.

Moreover, when the pillow plate consists of two metal sheets, typically stainless-steel sheets or Inconel, it is better to use laser welding to perform a series of spots and lines.

In an embodiment, the method further comprises a step vi) of arranging the at least two sheets inside a duct and filling the duct with a second fluid. This step is performed after steps i)-v) of the method take place.

After forming the at least one pillow plate, it/they can be located inside a duct. In an embodiment, when more than one pillow plate are formed, then the pillow plates assemble as a stack with an even or an uneven separation before introducing them in the duct.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1A: This figure shows a pillow plate of a PPHE assembly of the state of the art.
- Figure 1B: This figure shows a partial longitudinal cross section view of a pillow plate of a PPHE assembly of the state of the art.
- Figure 2: This figure shows a detailed view of a welding spot in a pillow plate of a PPHE assembly of the state of the art.
- Figure 3: This figure shows a detailed view of a welding spot with a perforated hole in a pillow plate of a PPHE assembly according to an embodiment of the invention.
- Figure 4: This figure shows a plate of a PPHE assembly according to an embodiment of the invention in which a pattern of perforated holes is present.
- Figure 5: This figure shows cross section views of different PPHE assemblies according to different embodiments of the invention, the PPHE assemblies comprising a duct with one or more pillow plates inside it.
- Figure 6: This figure shows a schematic view of a stack of pillow plates of a PPHE assembly according to an embodiment of the invention.
- Figure 7: This figure shows the temperature field (in °C) of a portion of pillow plate of a PPHE assembly of the state of the art (without perforated holes in the welding spots) in comparison with the temperature field (in °C) of a portion of pillow plate of a PPHE assembly according to an embodiment of the invention (with perforated holes in the welding spots).
- Figure 8A: This figure shows a Von Mises stress diagram (in Pa) of a pillow plate of a PPHE assembly of the state of the art in comparison with a Von Mises stress diagram (in Pa) of a pillow plate of a PPHE assembly according to an embodiment of the invention, wherein the diameter of the welding spot is 8 mm.
- Figure 8B: This figure shows a Von Mises stress diagram (in Pa) of a pillow plate of a PPHE assembly of the state of the art in comparison with a Von Mises stress diagram (in Pa) of a pillow plate of a PPHE assembly according to an embodiment of the invention, wherein the diameter of the welding spot is 12 mm.
- Figure 9A: This figure shows a Tresca stress diagram (in Pa) measured around a welded joint of a pillow plate of a PPHE assembly of the state of the art in comparison with a Tresca stress diagram (in Pa) measured around a welded joint of a pillow plate of a PPHE assembly according to an embodiment of the invention, wherein the diameter of the welding spot is 8 mm.
- Figure 9B: This figure shows a Tresca stress diagram (in Pa) measured around a welded joint of a pillow plate of a PPHE assembly of the state of the art in comparison with a Tresca stress diagram (in Pa) measured around a welded joint of a pillow plate of a PPHE assembly according to an embodiment of the invention, wherein the diameter of the welding spot is 12 mm.

### DETAILED DESCRIPTION OF THE INVENTION

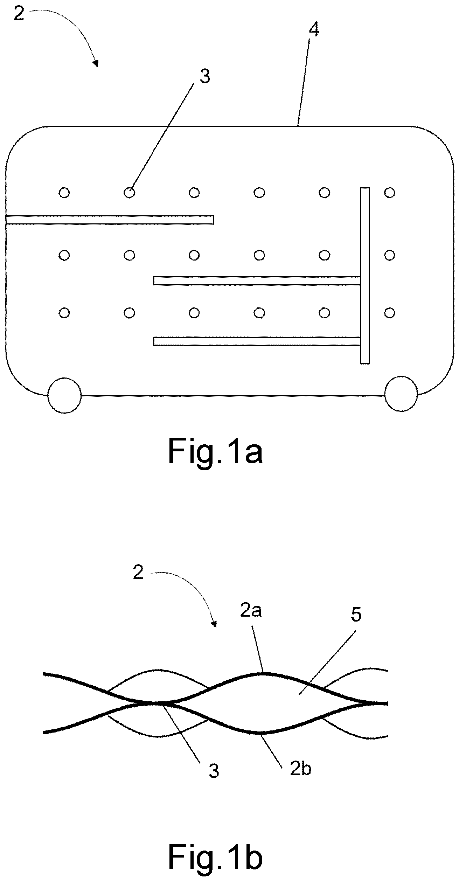

Figure 1A shows a plate of a PPHE assembly (1) that comprises:
- at least two sheets (2a, 2b) being coupled to each other by means of
   - a plurality of welding spots (3) that join respective portions of each sheet (2a, 2b), defining a plurality of welded areas (3a), and
   - a plurality of continuous welds (4) that join, at least partially, respective external edges of each sheet (2a,2b), and
- an inner hollow volume (5) defined between the at least two sheets (2a, 2b), the inner hollow volume (5) comprising a first fluid and being configured for transferring heat from a second fluid located outside the at least one plate (2) to the first fluid, in an operative mode.

Figure 1B shows a partial longitudinal cross sectional view of the plate of Figure 1A.

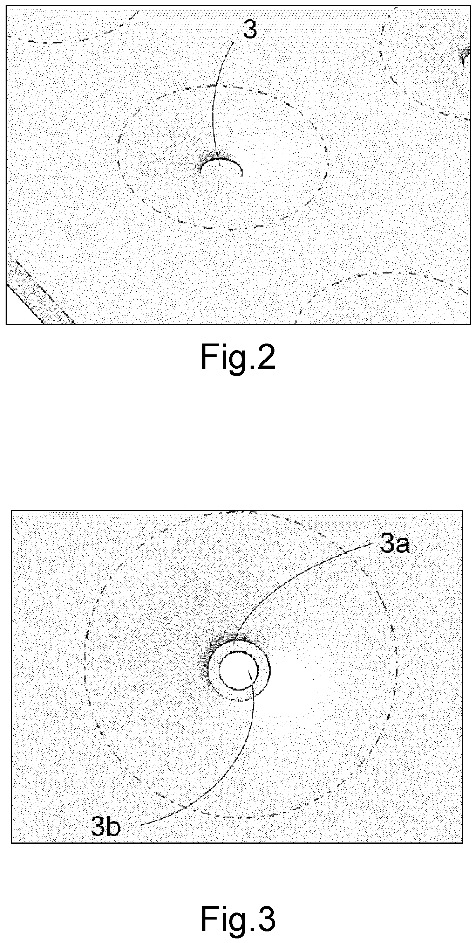

Figure 2 shows a detailed view of one of the welding spots of the pillow plate depicted in Figure 1.

The present invention is directed to a PPHE assembly comprising one or more of the plates shown in Figure 1 with additional features that make it suitable for being used in an aircraft acoustic muffler (10).

In particular, at least one of the plurality of welding spots (3) of the plate comprises a perforated hole (3b). An example of perforated hole (3b) according to the invention can be seen in Figure 3. More particularly, in Figure 3, it can be observed a welding spot (3) defining a welded area (3a) with a perforated hole (3b).

In the embodiment shown in Figure 3, the perforated hole (3b) of the welding spot (3) is concentric to the welded area (3a) of the welding spot (3); however, other configurations between the perforated hole (3b) and the welded area (3a) are possible.

In an embodiment, the contours of the perforated hole (3b) that delimit said perforated hole (3b) in each sheet (2a, 2b) are also welded.

For simplicity, Figure 3 just shows one welding spot (3) with a perforated hole (3b). However, according to an embodiment of the invention, a specific pattern of the perforated holes (3b) can be made at all the welding spot (3) or at some of them.

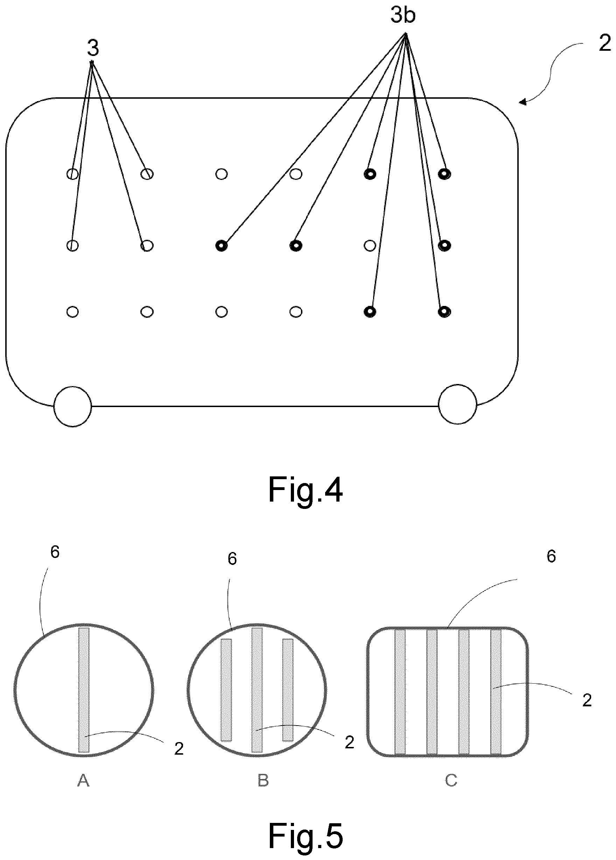

An example of a pattern of perforated holes (3b) performed in the plate (2) is shown in Figure 4.

In an embodiment, all the welding spots (3) comprise a perforated hole (3b).

In an embodiment, the pattern made on the pillow plates (2) depends on the expected temperature distribution on each pillow plate (2) in an operative mode, wherein;
- the number of perforated holes (3b) is greater in the parts of the plate (2) wherein it is expected to reach greater temperatures than in the parts of the plate (2) wherein it is expected to reach lower temperatures, and/or
- the diameter of the perforated holes (3b) is greater in the parts of the plate (2) wherein it is expected to reach greater temperatures than in the parts of the plate (2) wherein it is expected to reach lower temperatures, and/or
- the pitch among perforated holes (3b) is lower in the parts of the plate (2) wherein it is expected to reach greater temperatures than in the parts of the plate (2) wherein it is expected to reach lower temperatures.

In an embodiment, the at least one plate (2) comprises at least one additional inner hollow volume (5.1) defined between the at least two sheets (2a, 2b), wherein
- the inner hollow volume (5) and each additional inner hollow volume (5.1) are separated by a continuous welding to avoid fluidic communication among them; and
- each additional inner hollow volume (5.1) comprises an additional fluid that is equal to or that is different from the first fluid.

Figure 5 shows different embodiments of the PPHE assembly (1) according to the invention. In all of them, the PPHE assembly (1) comprises a duct (6), wherein the at least one plate (2) is arranged inside the duct (6) and wherein the second fluid circulates through the volume existing between the at least one plate (2) and the inner walls of the duct (6).

In particular, figure A) illustrates one plate (2) arranged inside a circular duct (6); figure B) shows three pillow plates (2) arranged inside a circular duct (6); and figure C) shows four pillow plates (2) arranged inside a rectangular duct (6).

As it can be seen in Figures 5B and C, there are embodiments of the invention wherein the PPHE assembly (1), with or without the duct (6), comprises a plurality of plates (2) assembled as a stack with an even separation. In other embodiments, such stack is assembled with an uneven separation.

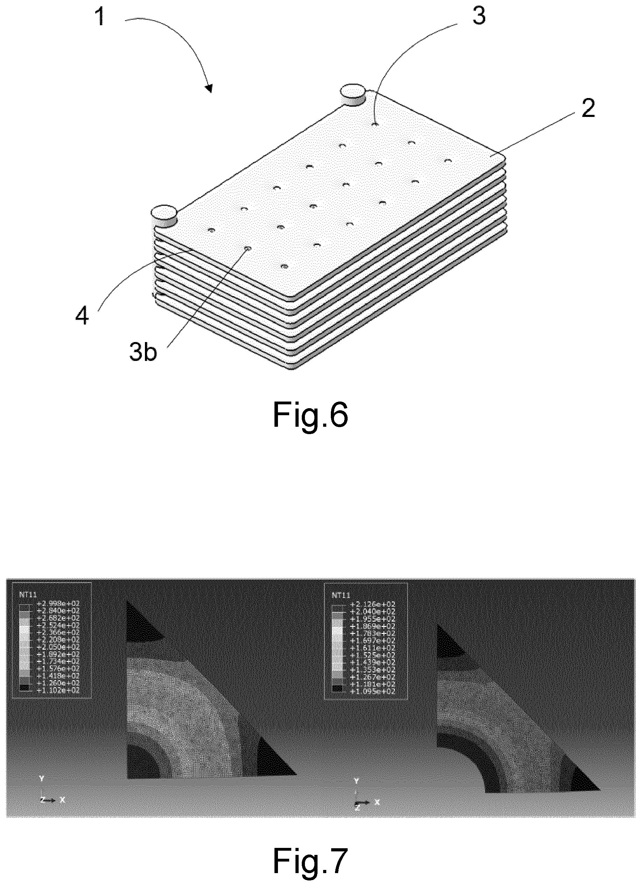

Figure 6 also shows a PPHE assembly (1) for an aircraft acoustic muffler (10) that comprises a plurality of plates (2), specifically six pillow plates (2), forming a stack. In an embodiment, such stacks are placed inside a duct (6),

In an embodiment, the plurality of plates (2) of the stack are joined by means of at least one inlet collector and at least one outlet collector, the at least one inlet collector and the at least one outlet collector being configured to be in fluidic communication with the inner hollow volume (5) of each plate (2) and/or with the at least one additional inner hollow volume (5.1) of each plate (2), if any.

In an embodiment, the first fluid of one or more of the plates (2) of the stack is different from the first fluid of the rest of the plates (2) of the stack.

Figure 7 shows the result of several finite element analyses that have been performed to demonstrate the benefits from a structural standpoint for pillow plates working at high temperatures (plate temperature around 300°C). In particular, Figure 7 shows the temperature field (in °C) of a portion of pillow plate of a PPHE assembly wherein the welding spots do not comprise perforated holes (left) and wherein the welding spots comprise perforated holes (right).

As it can be seen in Figure 7, the maximum temperature is reduced around 40 % in the pillow plate with perforated holes in the welding spots. In contrast, the minimum temperature is kept almost constant in both configurations of pillow plates. This means that the pillow plate configuration with perforated holes leads to a more uniform temperature field along its surface working at the same conditions.

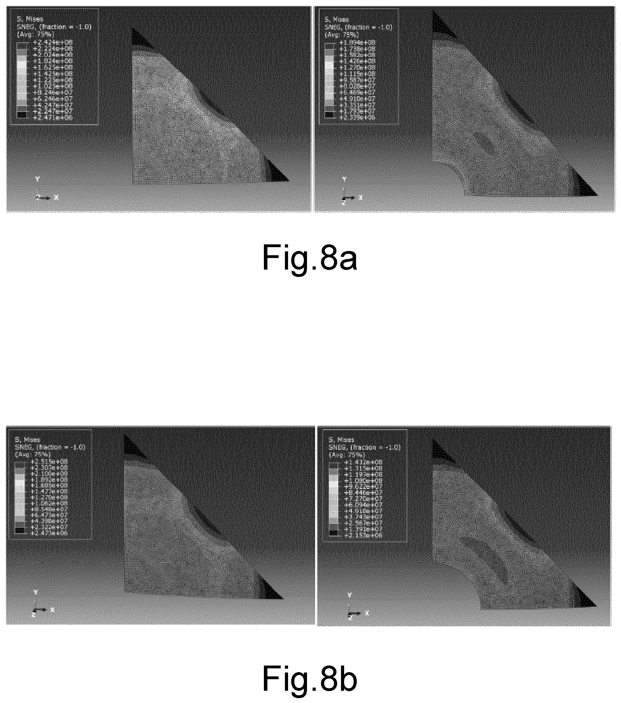

Figure 8A shows a Von Mises stress diagram (in Pa) of a pillow plate of a PPHE assembly of the state of the art (without perforated holes - left) in comparison with a Von Mises stress diagram (in Pa) of a pillow plate of a PPHE assembly according to an embodiment of the invention (with perforated holes - right), wherein the diameter of the welding spot is 8 mm.

Figure 8B shows a Von Mises stress diagram (in Pa) of a pillow plate of a PPHE assembly of the state of the art (without perforated holes - left) in comparison with a Von Mises stress diagram (in Pa) of a pillow plate of a PPHE assembly according to an embodiment of the invention (with perforated holes - right), wherein the diameter of the welding spot is 12 mm.

As it can be seen in Figures 8A and 8B, for welding spot diameters between 8 and 12 mm, the maximum stress is reduced between 20-40% when the welding spots have perforated holes.

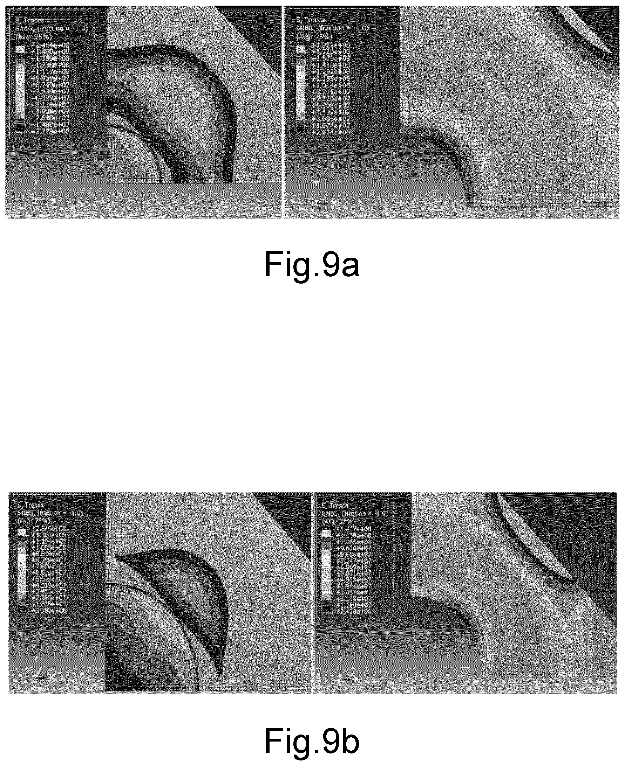

Figure 9A shows a Tresca stress diagram (in Pa) measured around a welded joint of a pillow plate of a PPHE assembly of the state of the art (without perforated holes and a temperature of 285°C - left) in comparison with a Tresca stress diagram (in Pa) measured around a welded joint of a pillow plate of a PPHE assembly according to an embodiment of the invention (with perforated holes and a temperature of 249°C - right), wherein the diameter of the welding spot is 8 mm.

Figure 9B shows a Tresca stress diagram (in Pa) measured around a welded joint of a pillow plate of a PPHE assembly of the state of the art (without perforated holes and a temperature of 271°C - left) in comparison with a Tresca stress diagram (in Pa) measured around a welded joint of a pillow plate of a PPHE assembly according to an embodiment of the invention (with perforated holes and a temperature of 212°C - right), wherein the diameter of the welding spot is 12 mm.

As shown in Figures 9A and 9B, the stress around a welded joint may be slightly increased when the welding spots have small diameters (case 8 mm: + 16%). However, in case of welding spots of relatively high diameters, the stress around the welded joint is reduced (case 12 mm: -11%).

## Claims

1. A Pillow Plates Heat Exchanger, PPHE, assembly (1) for an aircraft acoustic muffler (10) that comprises at least one plate (2), wherein the at least one plate (2) comprises:
- at least two sheets (2a, 2b) being coupled to each other by means of
• a plurality of welding spots (3) that join respective portions of each sheet (2a, 2b), defining a plurality of welded areas (3a), and
• a plurality of continuous welds (4) that join, at least partially, respective external edges of each sheet (2a,2b), and
- an inner hollow volume (5) defined between the at least two sheets (2a, 2b), the inner hollow volume (5) comprising a first fluid and being configured for transferring heat from a second fluid located outside the at least one plate (2) to the first fluid, in an operative mode, and
wherein at least one of the plurality of welding spots (3) comprises a perforated hole (3b).

2. The Pillow Plates Heat Exchanger assembly (1) according to claim 1 further comprising a duct (6), wherein the at least one plate (2) is arranged inside the duct (6) and wherein the second fluid circulates through the volume existing between the at least one plate (2) and the inner walls of the duct (6).

3. The Pillow Plates Heat Exchanger assembly (1) according to any of the previous claims, wherein the contours of the perforated hole (3b) that delimit said perforated hole (3b) in each sheet (2a, 2b) are welded.

4. The Pillow Plates Heat Exchanger assembly (1) according to any of the previous claims, wherein the perforated hole (3b) of the welding spot (3) is concentric to the welded area (3a) of the welding spot (3).

5. The Pillow Plates Heat Exchanger assembly (1) according to any of the previous claims, wherein the pattern of the perforated holes (3b) depends on the temperature distribution expected in the plate (2) in an operative mode, wherein
- the number of perforated holes (3b) is greater in the parts of the plate (2) wherein it is expected to reach greater temperatures than in the parts of the plate (2) wherein it is expected to reach lower temperatures, and/or
- the diameter of the perforated holes (3b) is greater in the parts of the plate (2) wherein it is expected to reach greater temperatures than in the parts of the plate (2) wherein it is expected to reach lower temperatures, and/or
- the pitch among perforated holes (3b) is lower in the parts of the plate (2) wherein it is expected to reach greater temperatures than in the parts of the plate (2) wherein it is expected to reach lower temperatures.

6. The Pillow Plates Heat Exchanger assembly (1) according to any of claims 1-4, wherein all the welding spots (3) comprise a perforated hole (3b).

7. The Pillow Plates Heat Exchanger assembly (1) according to any of previous claims, wherein the at least one plate (2) comprises at least one additional inner hollow volume (5.1) defined between the at least two sheets (2a, 2b), wherein
- the inner hollow volume (5) and each additional inner hollow volume (5.1) are separated by a continuous welding to avoid fluidic communication among them; and
- each additional inner hollow volume (5.1) comprises an additional fluid that is equal to or that is different from the first fluid.

8. The Pillow Plates Heat Exchanger assembly (1) according to any of previous claims, wherein the PPHE assembly (1) comprises a plurality of plates (2) assembled as a stack with an even or an uneven separation.

9. The Pillow Plates Heat Exchanger assembly (1) according to the previous claim, wherein the plurality of plates (2) of the stack are joined by means of at least one inlet collector and at least one outlet collector, the at least one inlet collector and the at least one outlet collector being configured to be in fluidic communication with the inner hollow volume (5) of each plate (2) and/or with the at least one additional inner hollow volume (5.1) of each plate, if any.

10. The Pillow Plates Heat Exchanger assembly (1) according to any of claims 8 or 9, wherein the first fluid of one or more of the plates (2) of the stack is different from the first fluid of the rest of the plates (2) of the stack.

11. An acoustic muffler (10) for an aircraft (11) comprising a PPHE assembly (1) according to any of previous claims.

12. An aircraft (11) comprising an acoustic muffler (10) according to the previous claim.

13. Method for manufacturing a Pillow Plates Heat Exchanger assembly (1) according to any of claims 1-10, wherein the method comprises the steps of:
i) providing at least two sheets (2a, 2b);
ii) welding, at least partially, the external edges of the at least two sheets (2a,2b) forming a plate;
iii) performing a plurality of welding spots (3) to join respective portions of each sheet (2a, 2b), defining a plurality of welded areas (3a) in the plate;
iv) inflating the space between the at least two sheets (2a, 2b) by hydroforming with a first fluid, defining an inner hollow volume (5) inside the plate; and
v) perforating the welded area (3a) of at least one of the plurality of welding spots (3) to form a perforated hole (3b).

14. The method according to claim 13, wherein the steps ii) and iii) are performed with a laser welding machine.

15. The method according to any of claims 13 or 14, wherein the method further comprises a step vi) of arranging the at least two sheets (2a, 2b) inside a duct (6) and filling the duct (6) with a second fluid.
